# EUROPEAN PATENT APPLICATION

(11) **EP 3 153 550 A1**
(43) Date of publication of application: **12.04.2017**
(21) Application number: 15188379.0
(22) Date of filing: 05.10.2015
(51) Int. Cl.: C09D 1/00, C09D 7/12, C09D 5/00, C03C 17/00, C03C 17/25

(54) **ROOM TEMPERATURE CURING HIGHLY DURABLE ANTI-REFLECTIVE COATING CONTAINING NANOPARTICLES**

(71) Applicant: 3M Innovative Properties Company, St. Paul, MN 55133-3427 (US)
(72) Inventor: STOLLWERCK, Gunther, 47802 Krefeld (DE); Kühneweg, Bernd, 40468 Duesseldorf (DE); Strerath, Christiane, 40477 Duesseldorf (DE)
(74) Representative: Hettstedt, Stephan

(57) **Abstract**

In one aspect of the present disclosure, there is provided an antireflective coating composition comprising (a) hydrophilic spherical silica nanoparticles; (b) hydrophilic elongated silica nanoparticles, wherein the coating composition exhibits a pH-value in the range of from 7 to 12.5 and the ratio between the hydrophilic spherical silica nanoparticles (a) and the hydrophilic non-spherical silica nanoparticles (b) is in the range of from 10:1 to 1:10.

In a further aspect of the present disclosure there is provided a method for coating a substrate, comprising the steps
(i) providing a substrate having at least one surface;
(ii) providing the antireflective coating composition according to the present disclosure;
(iii) coating the substrate on at least one surface;
(iv) drying the coating, thereby obtaining a coated substrate,
wherein step (iv) is carried out at a temperature in the range of from 5 °C to 300 °C.

## Description

### Technical Field

The disclosure relates to an antireflective coating composition comprising hydrophilic spherical and elongated silica nanoparticles in a certain ratio. The present disclosure further relates to coated substrate. In another aspect, the present disclosure relates to a method for coating a substrate. In still a further aspect, the present disclosure relates to the use of such coating compositions and coated substrates.

### Background

It has been known since the 1940s that nanoparticles may be used to obtain antireflective coatings (US 2,432,484). The optical function of such an antireflective coating is generally achieved by the effective refractive index of the coating being lower than that of the substrate. This leads to a gradient of the refractive index of air to the refractive index of the substrate. Thus, the amount of light reflected from the coated substrate is reduced.

Presently, antireflective coatings for glass based on SiO₂ nanoparticles have to be sintered at temperatures above 500 °C in order to achieve a coating which is mechanically stable for longer terms. That is, an antireflective coating is applied at the glass manufacturer before the glass pane is entered into a tempering oven running at a temperature above 500 °C. Thus, tempering of the glass and curing or sintering the antireflective coating takes place at the same time.

However, it would be desirable when an antireflective coating could be applied on already installed glass substrates such as solar panels or greenhouse panels. This would only be possible when an antireflective coating is applied by simple means, which then is capable of curing at ambient conditions and providing antireflective properties and, desirably, a certain mechanical stability. Moreover, the antireflective coating composition should exhibit a certain shelf life, which is desirable for applications on-site.

### Summary

In one aspect of the present disclosure, there is provided an antireflective coating composition comprising (a) hydrophilic spherical silica nanoparticles; (b) hydrophilic elongated silica nanoparticles, wherein the coating composition exhibits a pH-value in the range of from 7 to 12.5 and the ratio between the hydrophilic spherical silica nanoparticles
(a) and the hydrophilic non-spherical silica nanoparticles (b) is in the range of from 10:1 to 1:10.

In a further aspect of the present disclosure there is provided a method for coating a substrate, comprising the steps
(i) providing a substrate having at least one surface;
(ii) providing the antireflective coating composition according to the present disclosure;
(iii) coating the substrate on at least one surface;
(iv) drying the coating, thereby obtaining a coated substrate,
wherein step (iv) is carried out at a temperature in the range of from 5 °C to 300 °C.

In another aspect of the present disclosure there is provided a coated substrate, comprising a substrate and a coating on at least one surface of the substrate, the coating obtained by the antireflective coating composition according to the present disclosure or by a method according to the present disclosure.

The present disclosure further provides a use of the antireflective coating composition or of the coated substrate for improving the light transmission and/or the hydrophilicity of a solar glass panel, a greenhouse glass panel, a window, or structural glazing of buildings or vehicles.

In yet another aspect of the present disclosure there is provided a use of the antifreflective coating composition or of the coated substrate for improving the crop yield of plants in a greenhouse.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

Unless explicitly stated otherwise, all embodiments of the present disclosure can be combined freely.

The first aspect of the present disclosure is an antireflective coating composition comprising
(a) hydrophilic spherical silica nanoparticles;
(b) hydrophilic elongated silica nanoparticles;
wherein the coating composition exhibits a pH-value in the range of from 7 to 12.5 and the ratio between the hydrophilic spherical silica nanoparticles (a) and the hydrophilic non-spherical silica nanoparticles (b) is in the range of from 10:1 to 1:10.

The coating composition may exhibit a good shelf-life and easy processability. When coated on a substrate, preferably glass, a coating may be obtained which may act as an antireflective coating. For example, when coated on a glass panel or sheet, the coating obtained from the coating composition may increase the transmission of light through the sheet or panel, and may further exhibit desirable properties such as a good resistance to abrasion and/or aging, and may even give rise to a high hydrophilicity.

The coating composition comprises silica nanoparticles. Silica nanoparticles comprise silicon dioxide, preferably comprise at least 90 wt.-% of silicon dioxide. The nanoparticles as considered herein are particles having a length of less than 1000 nm, more preferably of less than 500 nm, even more preferably of less than 350 nm. The sizes of the nanoparticles may be determined by spreading a dilute dispersion of the particles over a surface and measuring the sizes of individual particles by using microscopic techniques, preferably scanning electronic microscopy (SEM) or atomic force microscopy (AFM). Preferably, the average sizes are determined by measuring the sizes of at least 100 individual particles. The aspect ratio is the ratio between the length and the width of a particle. In case of elongated nanoparticles as considered herein the length is the largest distance between two points in the particle and the width is the largest diameter as measured perpendicular to the central axis of the particle. Both length and width are measured from the projection of the particles as observed under the microscope.

The coating composition as described herein comprises (a) spherical silica nanoparticles. "Spherical" as used herein means substantially spherical, i.e. the spherical silica nanoparticles have an average aspect ratio of about 1:2 or lower, preferably of about 1:1 or lower. Preferably, the nanoparticles have an average particle size in the range of from 1 to 20 nm, more preferably of from 3 to 15 nm. Generally, spherical nanoparticles as used herein are provided in a solvent, preferably as dispersion, more preferably as aqueous dispersion. An example for hydrophilic spherical silica nanoparticles is Nalco 1115 (Nalco Inc.) comprising 15 % colloidal SiO₂.

Further, the coating composition as described herein comprises (b) elongated silica nanoparticles. Elongated nanoparticles as considered herein are nanoparticles which are generally non-spherical, i.e. wherein one diameter of the particle deviates from another diameter of the same particle. Generally, elongated nanoparticles have a larger aspect ratio than spherical nanoparticles, preferably in the range of from 1:2.5 to 1:20, more preferably in the range of from 1:4 to 1:7. An examples for hydrophilic elongated silica nanoparticles is Snowtex ST-OUP (Nissan Chemical) comprising 15 to 16 wt.-% amorphous SiO₂.

The silica nanoparticles used herein are generally hydrophilic, i.e. they have a polar surface, or even a negative or positive surface charge, preferably a negative surface charge. The surface of the silica nanoparticles used herein is substantially not modified with organic compounds having reactive groups capable of crosslinking such as acrylates, methacrylates, vinylic species or epoxies. Moreover, the surface of the silica nanoparticles used herein is also not activated by means of surface modifying agents such as alkoxy silanes, alkoxy zirconates, alkoxy aluminates and the like. Using hydrophilic silica nanoparticles without any additional reactive groups as discussed above in combination with the pH values as outlined herein provides the antireflective coating composition as described herein. In particular, the antireflective coating composition is capable of forming a coating having considerable mechanical stability after the application has been applied and cured at ambient conditions, without the need for elevated temperatures or the need for additional tempering of the coating, i.e. the coating and the coated substrate. This has the advantage that the coating composition according to the present disclosure may be applied directly on the substrate "on-site", e.g. on solar panels or greenhouse panels which are already built in. Accordingly, the coating composition according to the present disclosure has an advantageous easy processability, long shelf life, and provides coatings in a safe and easy manner which may exhibit a combination of desirable properties such as antireflective optical properties, mechanical properties such as abrasion resistance even after weathering conditions, and providing the substrate with an hydrophilic surface. Without wanting being bound to theory, it may be assumed that upon curing, the Si-OH groups present on the surface of the silica nanoparticles react with each other, thereby forming Si-O-Si bonds connecting different nanoparticles. Hence, it may be further assumed that this may form a network between the different nanoparticles. Furthermore, it may be assumed that Si-O-Si-bonds may be formed between the silica nanoparticles of the coating composition as described herein and a glass or ceramics substrate (which also comprise SiO₂ and may have Si-OH groups on its surface). Accordingly, a tight connection between coating and substrate may be obtained upon curing, even upon curing only at ambient temperature for a period of time such as 24 h or even less.

With regard to the size of the nanoparticles, it is preferred that the nanoparticles (b) have a diameter over the primary axis of less than 200 nm, preferably of less than 150 nm, and the nanoparticles (a) have a diameter of less than 100 nm, preferably less than 50 nm.

The coating compositions according to the present disclosure generally exhibit a pH-value in the range of from 7 to 12.5, preferably in the range of from 8 to 11.5, more preferably in the range of from 8.5 to 11. Alternatively, the pH-value of the compositions according to the present disclosure may have a pH-value in the range of from 11 to 12.5. It was found that keeping the pH-values of the compositions according to the present disclosure in these ranges may have the effect of an enhanced shelf-life of the compositions, i.e. a certain resistance towards aging, and enhanced properties of the coatings obtained from said compositions as described herein. However, decreasing the pH-value of the compositions under the above lower limits, e.g. to a pH-value of from 2 to 4 would result in a strongly decreased shelf-life of the compositions.

With regard to the different nanoparticles used, it is preferred that the ratio between the hydrophilic spherical silica nanoparticles (a) and the hydrophilic elongated silica nanoparticles (b) is in the range of from 5:1 to 1:5, preferably in the range of from 3:1 to 1:3, more preferably in the range of from 2:1 to 1:2, even more preferably in the range of from 1:1 to 1:2.

When preferred ratios between hydrophilic spherical silica nanoparticles (a) and hydrophilic elongated silica nanoparticles (b) are used, coatings may be obtained in which the above-indicated effects are particularly present. For example, the transmission of light through the coating and e.g. a float glass panel coated with the coating may be enhanced.

It is preferred that the coating composition of the present disclosure further comprises (c) a polysilicate. The addition of a polysilicate to the composition has the effect that the coatings obtained from said composition may exhibit enhanced and reproducible mechanical properties such as resistance towards abrasion. Preferably, the polysilicate is a polysilicate of the formula M₂(SiO₂)ₙO, wherein M is selected from Li, Na, K, preferably Li or Na, more preferably Li, and n is an integer between 2 and 15, preferably between 4 and 9. It is further preferred that the polysilicate is employed as solved in a solvent, preferably water. For example, a polysilicate of the general formula Li₂Si₅O₁₁ may be obtained from Hansa Group as 20 % solution in water (CAS-Nr. 12627-14-4).

It is further preferred that the coating compositions according to the present disclosure further comprise (d) an organic compound, preferably wherein the organic compound is selected from polysaccharides, proteins and polyvinyl alcohols, preferably are selected from natural and modified polysaccharides, preferably polysaccharides selected from the list consisting of xanthan, carrageenan, pectin, gellan, xanthan gum, diuthan, cellulose ethers such as carboxymethyl cellulose, methyl cellulose, ethyl cellulose and hydroxyethyl cellulose. The addition of at least such an organic compound may result in more even coatings obtained from the compositions, as well as in a better processability of the compositions, in particular when coating substrates by spraying or by doctor blade. Without wanting to be bound to theory, a more even coating may arise from an increase of the viscosity when drying. Thus, the organic compound (d) may act as a rheology modifier in the compositions according to the present disclosure. Examples for the organic compound (d) which may be advantageously used in the coating compositions described herein are xanthan (available from Jungbunzlbauer) and Keltrol BT (available from CP Kelco).

Preferably, the coating compositions according to the present disclosure further comprise (e) a solvent. A solvent will generally improve the processability of the coating compositions, e.g. to enable application of the coating composition to a substrate by using spraying, doctor blade or painting brush. Due to the nature of the ingredients of the coating composition, polar solvents are generally preferred. Preferably, the solvent comprises at least one solvent selected from the list consisting of alcohols and water, preferably comprises at least one alcohol and/or water, more preferably essentially consists of water. Examples for alcohols are ethanol, propanol, butanol, iso-butonal and tert-butanol, as well as mixtures thereof. For example, the solvent may consist of a mixture of ethanol and water. The ratio of ethanol and water may be adjusted to the compounds used, the selected method of application, the substrate, the drying method as well as price and time concerns. In this regard, it is more preferred to use water as solvent (d), wherein further minor amounts of alcohol such as ethanol may be contained. The use of water is particularly useful for applications as aftermarket supplementary coatings on solar panels and greenhouses, which can be manually applied by the user.

With regard to the amounts of the components (a) to (d), it is preferred that coating composition comprises:
(a) hydrophilic spherical silica nanoparticles in an amount of from 15 to 85 wt.-%, preferably from 25 to 70 wt.-%, more preferably from 30 to 55 wt.-% relative to the total weight of the solid contents of the coating composition;
(b) hydrophilic spherical silica nanoparticles in an amount of from 15 to 85 wt.-%, preferably from 25 to 70 wt.-%, more preferably from 40 to 70 wt.-% relative to the weight of the solid contents of the coating composition;
(c) optionally a polysilicate in an amount of from 1 to 25 wt.-%, preferably from 5 to 15 wt.-% relative to the total weight of the solid contents of the coating composition;
(d) optionally an organic compound in an amount of from 0.01 to 5 wt.-%, preferably from 0.02 to 3 wt.-%, more preferably from 0.04 to 1.6 wt.-% relative to the total weight of the solid contents of the coating composition, and
(e) optionally a solvent.

When the coating composition contains the ingredients in the above ranges and preferred ranges, the effects described herein become particularly pronounced. It is understood that the concentration of the coating compositions may be adjusted to the particular use, provided that the pH-value of the composition is in the range of from 7 to 12.5, in particular in the preferred and further preferred ranges.

Additionally, the coating compositions according to the present disclosure may comprise (f) surfactants, preferably anionic surfactants. Surfactants may improve the wetting of surfaces of substrates, in particular glass, and, particularly, on non-activated surfaces. Preferred are anionic surfactants of the general formula CₙH₂ₙ₋₁SO₃Na, wherein n is 10 to 20, preferably 14 to 16. As an example for a surfactant (f) useful for the coating compositions described herein, Hansanyl OS (10 % solution) available from Hansa Group (CAS-Nr. 68439-57-6) may be named.

The coating composition according to the present disclosure may be used for coating surfaces of substrates. Thus, the present disclosure further provides a method for coating a substrate, comprising the steps
(i) providing a substrate having at least one surface;
(ii) providing the coating composition according to the present disclosure;
(iii) coating the substrate on at least one surface;
(iv) drying the coating, thereby obtaining a coated substrate,
wherein step (iv) is carried out at a temperature in the range of from 5 °C to 300 °C.

The coating may be applied in step (iii) by any known process of wet coating deposition such as spin coating, dip coating, spray coating, flow coating, meniscus coating, knife coating, capillary coating and roll coating. Thus, application may be carried out using e.g. a Meyer bar, a brush, spraying, dip-coating, kiss-coating, roller bar or knife, dependent on the substrate, the scale (i.e. the area to be coated) and other factors. For example, coating substrates on large scales in a factory may offer completely different possibilities than, for example, coating the surfaces of solar panels already installed on a site or coating the outer or inner surfaces of glass panels of a green house, as the skilled person will appreciate. Thus, coating in step (iii) may be carried out by means of a paint brush, knife, spraying device or roller bar when on-site application on already installed solar panels or in greenhouse panel is carried out. This means that application may be carried out in an easy, safe and convenient manner, preferably even by untrained personnel. For coating in step (iii), it is preferred that the coating compositions used in the method described herein comprise (e) as solvent as described above. The thickness of the coating applied in step (iii) may be adapted to the envisaged use of the coated substrate, however, it is strongly preferred that coating is carried out at least to a thickness necessary to provide at least certain antireflective properties to the substrate. For example, the coating composition may be applied to a wet film thickness in the range of from 1 to 300 µm, preferably of from 5 to 200 µm, more preferably of from 10 to 100 µm. With regard to the dry film thickness, it is preferred to obtain thicknesses of the coating in the range of from 5 to 300 nm, preferably in the range of from 10 to 180 nm, more preferably in the range of from 15 to 130 nm. The skilled person will appreciate that while low dry film thicknesses (e.g. in the range of from 5 to 50 nm) are sufficient to obtain a coating exhibiting hydrophilic properties giving rise to e.g. anti-soiling effects, optimum dry film thicknesses for obtaining desirable optical properties such as antireflective effects are in the range of from 70 to 150 nm, preferably in the range of from 80 to 120 nm.

Substrates used in the method according to the present disclosure have at least one surface which may be coated with the coating composition. Since the coating obtained in the method has antireflective properties, the skilled person will appreciate that substrates are selected for which antireflective properties are desirable. In this regard, it is preferred that the substrate is selected from polymeric materials, glass, metal, wood, ceramics, preferably glass and metal, more preferably glass and ceramics, even more preferably glass. Glass is particularly preferred since the coating obtained, due to its antireflective properties, may lead to an increase of the transmission of light, in particular visible light through glass, in particular glass films, panels or sheets. Glass may be coloured or tinted, however, in most cases uncoloured glass is preferred since a maximum of light transmission through the substrate is desired. Metal substrates may be useful for applications in the automotive industry or for the manufacture of panels or sheets for applications in house constructions. Ceramics may be useful for the same applications as metal substrates. With regard to metal, wood and ceramic materials, the optical properties of the coating obtained according to the present disclosure are of lower importance, however, the hydrophilic properties of the coating as described herein may provide metal, wood and ceramic substrates with desirable anti-soiling properties. The same applies to polymeric materials. With regard to polymeric materials, materials which exhibit good light transmitting properties are preferred. Applications of a polymeric substrate coated on at least one surface may include visors of helmets, windshields or windows of vehicles such as cars, airplanes, helicopters, trains, ships or boats, screens of televisions, computers, mobile phones, displays and windows of buildings. The substrate may have any form, provided it has at least one surface, for which any one of antireflective, hydrophilic and anti-soiling properties are desired. That is, substrate forms may include shaped articles, sheets, films and panels. Preferred forms are sheets, films and panels, in particular glass sheets, films and panels, which are particularly useful for applications in solar panels and green houses.

In step (iv), the coating obtained by coating at least one surface of the substrate with the coating composition described herein is dried. Drying may be carried out by any means known in the art, for example by exposing the object to elevated temperatures and/or application of a stream of air, preferably dry air, or by simply allowing the coating to dry under ambient conditions. That is, drying is carried out at a temperature in the range of from 5 ° to 300 °C including, for example, drying of the coating at ambient temperatures. That is, drying may preferably carried out at a temperature in the range of from 3 to 50 °C, preferably in the range of from 4 to 35 °C, and more preferably in the range of from 5 to 25 °C. The coating compositions may dry under ambient conditions, i.e. ambient temperatures, and a coating of sufficient mechanical and/or antireflective and/or hydrophil properties is obtained. With regard to the drying times, it is understood that the time required to obtain a fully cured coating are correlated with the temperatures applied. However, a coating having sufficient mechanical stability for further processing may be obtained after 5 h, after 2 h or even after 1 h after drying at ambient conditions as described above. A fully cured coating may be obtained after 24 h at ambient temperature as described above. This is very advantageous for the application of the coating on-site, e.g. at already installed panels of solar panels or greenhouses.

That means, the coating may be applied on solar panels and greenhouses under ambient conditions on the site were the solar panels or greenhouse are located. Thus, the method according to the present disclosure, together with the coating compositions according to the present disclosure, is particularly advantageous for users desiring to provide their already existing or installed solar panels or greenhouse panels with an effective and robust antireflective and/or hydrophilic coating. While drying at ambient temperatures, e.g. at temperature in the range of from 5° to 50 °C, is sufficient to obtain a coating having sufficient mechanical and/or antireflective properties, drying at higher temperatures than ambient temperatures, e.g. in the range of from 80 to 300 °C, may be carried out. This may have the effect of shortened drying times, and may have the further effect to improved mechanical properties such as scratch resistance and abrasion resistance of the coating, if necessary. This may be useful for coating substrates on a large or industrial scale such as in manufacturing processes of panels, sheets and films, in particular solar panels, green house panels, windshields, windows and displays.

The method may further comprise an additional step (iv) tempering the coated substrate obtained in step (iii) at a temperature in the range of from 300 to 800 °C, preferably in the range of from 400 to 600 °C. This may have the effect of improving the mechanical properties such as scratch resistance of the coating obtained in step (iii), if desired.

Another aspect of the present disclosure is a coated substrate, comprising a substrate and a coating on at least one of the surface of the substrate, the coating obtained from a composition according to the present disclosure or by a method according to the present disclosure. With regard to the substrate, the coating composition and the method, it is understood that the aforementioned substrates, coating compositions and methods described herein apply.

In particular, it is preferred that the substrate is a panel, sheet, shaped article of a film. Due to its properties, it is further preferred that the coated substrate is part of a solar panel, a display, a window, a windshield, a visor or a green house.
The coating of the coated substrate described herein may exhibit certain antireflective, hydrophilic and/or mechanical properties. Antireflective properties as considered herein give rise to another effect, i.e. an increase in transmission of light through a substrate, e.g. a float glass panel. Transmission performance as considered is according to ASTM D-1003 or DIN EN 9050 (issued 2003). Preferably, the coating exhibits a dT of at least 1.0 %, preferably at least 1.4 %, more preferably at least 1.8 %, and even more preferably at least 2.0 % according to DIN EN 9050. This has the effect that the transmission of light through e.g. a float glass panel used in solar panels or green houses may be increased by at least 2 %. An increase in light transmission in this magnitude means a considerable improvement for applications where light is directly translated into energy, plant growth or is otherwise exploited. For instance, the output of a solar panel module may be increased by 2 to 3 %. Similarly, the productivity in the production of plants directly depends on the supply of daylight. Therefore, a high optical transparency of a covering window, ceiling or wall panel of a greenhouse is of great importance. For instance, an increase of light transmission through the ceiling and wall panels of a greenhouse by 2 % may directly translate into an increase of the crop yield of said greenhouse by 2 % such as in the case of tomatoes, which is considered a significant improvement. Moreover, the coating of the coated substrate described herein may exhibit hydrophilic properties. In this regard, it is preferred that the coating exhibits a static water contact angle according to ISO 14989 (issued 2004) of 20 ° or less, preferably of 10 ° or less, more preferably of 7 ° or less, even more preferably of 5 ° or less. This has the effect that upon precipitation of moisture on the coating, a wetting of the surface instead of water drop formation may occur. This will give rise to several effects important for a variety of applications. For instance, the light transmission through e.g. a glass panel may be impaired by light scattering from the formation of water drops. Thus, the hydrophilic coating as described herein may have the advantage that wetting of its surface instead may occur so that formation of water drops and consequently loss of light transmission by scattering may be avoided to a certain extent. This is particularly important for the same applications mentioned above, in particular solar panels and greenhouse panels. In this regard, it is preferred that the coated substrate is a glass panel which is coated on at least one base pane, which would then form the outer surface of the panel (e.g. the outside surface of the solar panel and greenhouse panel, respectively).

In another preferred embodiment, the coated substrate is coated on two opposite faces of the substrate. In this regard, it is particularly preferred that the coated substrate is a glass panel, film or sheet which is coated on its two opposite base panes. Again, this is particularly useful for applications in a greenhouse. For example, if moisture precipitates in the form of drops on the lower side of a ceiling panel or window of a greenhouse, the drops may fall in an uncontrolled manner down to the plants below. Thus, the plants become wet, which is generally not desired in a greenhouse. Hence, when the lower side (i.e. the "inside") of a glass panel forming the ceiling panel or ceiling window of a greenhouse is coated with the coating described herein, formation of water drops on the greenhouse ceiling may be avoided. As result of the wetting of the coating surface, a large surface of the ceiling panel becomes wet upon precipitation of moisture, so that the precipitating moisture runs along the panel surface and may be subsequently drained in a controlled manner. Thus, when the coating according to the present disclosure is present on the inside of the greenhouse, both increase of light transmission and avoiding of uncontrolled drop formation may be achieved, which is particularly advantageous.

Moreover, the coating of the coated substrate according to the present disclosure may exhibit advantageous mechanical properties in terms of abrasion resistance according to DIN EN 1096-2 (issued 2012). In particular, abrasion tests may be performed according to the aforementioned norm by employing a force of 10 N and a velocity of 60 cycles/min, deionized water and 3M High Performance Microfiber Wipe 2010 and using 3000 cycles. It is preferred that a coated glass substrate exhibits a drop of dT according to DIN EN 9050 (issued 2003) of less than 1 % after the abrasion test conditions above.

Similarly, the coating of the coated substrate according to the present disclosure may exhibit advantageous properties in terms of resistance to weathering conditions such as according to the Accelerated Weathering Test QUV according to ASTM G154-6 (issued 2012). Similar to the abrasion resistance, the coating of a coated glass substrate as described herein may exhibit a drop of dT according to DIN EN 9050 (issued 2003) of less than 1 %, preferably of less than 0.8 %, more preferably of less than 0.6 %.

Due to the properties of the coating composition and the coated substrate according to the present disclosure, a further aspect of the present disclosure is a use of said coating composition or of said coated substrate for improving the light transmission and/or the hydrophilicity of a solar glass panel, a greenhouse glass panel, a window, or structural glazing of buildings or vehicles.

### Examples

The present disclosure is further described without however wanting to limit the disclosure thereto. The following examples are provided to illustrate certain embodiments but are not meant to be limited in any way. Prior to that some test methods used to characterize materials and their properties will be described.

### Abbreviations:

RT: room temperature
h: hour(s)
min: minute(s)
N: Newton
n.d.: not determined
Ex.: Example
Comp. Ex.: Comparative Example

### Used ingredients

Nalco 1115: Silica nanoparticle dispersion ex Nalco Inc., aspect ratio = 1:1 (spherical), average particle diameter = 4 nm, solid content = 15 % colloidal SiO₂, pH = 10 to 11, solvent = water.

Snowtex ST-OUP: Silica nanoparticle dispersion ex Nissan Chemical, aspect ration from 1:2.7 to 11.1 (non-spherical, elongated), average particle size = 9 to 15 nm / 40 to 100 nm, solid content 15 to 16 % amorphous SiO₂, pH 2 to 4, solvent = water.

Li-Polysilicate: Li₂Si₅O₁₁ ex Sigma Aldrich, solid content 20 to 25 %.

Keltrol BT: Xanthan gum ex CP Kelco

Hansanyl OS: C14-16 Sulfonate ex Hansa Group

### Methods

### Preparation:

The coating solutions were prepared by mixing the ingredients set forth in table 1 at room temperature in a vessel while stirring for about 1 h.

### Application:

The coating solution was applied as fresh coating solution and as aged solution on float glass using a 5 µm Meyer rod. After drying and curing at ambient temperatures the coated glass samples were kept at RT for 24 h before any further use.

### Aging:

The AR coating solution was stored in an oven for 14 days at 65 °C. Before further use the solution was conditioned at RT for at least 2 hours.

### Abrasion Testing:

Abrasion tests were performed on 5900 Reciprocating Abraser (Taber Industries). Abrasion was tested by employing a force of 10 N and a velocity of 60 cycles/min. Wet abrasion was performed employing deionized water. As wipe the 3M High Performance Microfiber Wipe 2010 was used. 3000 cycles were performed.

### Transmission Performance:

Transmission measurements were performed using Hunterlab Ultra Scan XE or Perkin Elmer Lambda 1050 UV/vis/IR spectrometer as indicated. The samples were measured following DIN EN 9050 (issued 2003). The values reported are average values of at least 3 separate measurements.

### Pressure Cooker Resistance:

An enforced pressure cooker test was executed at T = 120 °C. Testing up to 8 h, every 2 h transmission measurement as taken from the climate chamber (no cleaning or wiping).

### DampHeat (DH) Restistance:

Testing according to DIN EN 61215 (issued 2005). Climate chamber 85 % relative humidity, 85 °C, 1000 h. The values reported are average values of at least 5 different glass plates with each 5 measurements.

### QUV Test (Accelerated Weathering):

Testing according to ASTM G154-6 (issued 2012) Cycle 1. 1000h, 8 h 0.89 W/cm² at 60 °C; condensation 4 h at 50 °C, 3 measurements. Testing device: QLAB model QUV Spray.

### QUV test with spray (Accelerated Weathering):

Testing according to ASTM G154-6. 548h, 8 h 0.89 W/cm² at 60 °C, 15 min spray without heating, 3.75 h condensation at 50 °C, 3 measurements. Testing device: QLAB model QUV Spray.

### Static contact angle (water).

The test was performed according to ISO 15989 (issued 2004) in the following procedure: The contact angle was measured using Goniometer ERMA Contact Angle Meter G-1: 3 µl droplets were applied to the surface at 23 °C. The contact angle was measured after 20 sec. Sessile drop method with Young-Laplace method and Contact Angle System OCA from dataphysics, model OCA 15 Pro were used.

### Compositions:

**Table 1: Compositions according to the Examples and Comparative Examples. Values are given in wt.-% of the solids compounds relative to the total weight of the combined solids content of the composition.**

| | Ex. 1 | Ex. 2 | Ex. 3 | Ex. 4 | Ex. 5 | Ex. 6 |
|---|---|---|---|---|---|---|
| Nalco 1115 | 81.21 | 65.56 | 49.63 | 33.41 | 16.84 | 30.41 |
| Snowtex O-UP | 15.33 | 30.95 | 46.85 | 63.03 | 79.57 | 57.42 |
| Li₂Si₅O₁₁ 20 % in H₂O | | | | | | 8.93 |
| Keltrol BT | 2.99 | 3.02 | 3.04 | 3.07 | 3.10 | 2.80 |
| Hansanyl OS | 0.47 | 0.47 | 0.48 | 0.48 | 0.49 | 0.44 |

**Table 2: Compositions according to the Examples and Comparative Examples. Values are given in wt.-% relative to the total weight of the composition.**

| | A | Ex. 1 | Ex.2 | Ex.3 | Ex.4 | Ex. 5 | Ex.6 |
|---|---|---|---|---|---|---|---|
| H₂O | 99.46 | 40.75 | 40.33 | 39.91 | 39.22 | 38.60 | 43.33 |
| Solids content | | 2.94 | 2.94 | 2.93 | 2.94 | 2.94 | 2.94 |
| Nalco 1115 | | 14.05 | 11.32 | 8.55 | 5.77 | 2.91 | 5.25 |
| SnowtexO-UP | | 2.81 | 5.66 | 8.55 | 11.53 | 14.56 | 10.50 |
| Li₂Si₅O₁₁ 20 % in H₂O | | | | | | | 1.31 |
| Ingredient A | | 42.38 | 42.68 | 42.99 | 43.48 | 43.93 | 39.60 |
| Keltrol BT | 0.21 | | | | | | |
| Hansanyl OS | 0.33 | | | | | | |

The compositions according to the examples were then applied to the surface of glass samples as described above. Testing was carried out as further described above. The test results are set forth in tables 3 to 7 below.

In table 3, the transmission of samples coated with compositions according to examples 1, 2, 3, 4 and 5 as well as an uncoated sample of float glass were tested in accordance with the Hunterlab Ultra Scan XE with the measuring conditions described herein. It should be pointed out that the values should be seen relative to each other, i.e. allowing a comparison between the various samples measured herein.

**Table 3: Transmission measurement from 360 nm to 750 nm.**

| nm | Ex. 1 | Ex. 2 | Ex. 3 | Ex. 4 | Ex. 5 | uncoated |
|---|---|---|---|---|---|---|
| 360 | 86.73 | 87.40 | 87.69 | 87.85 | 87.24 | 84.86 |
| 370 | 88.28 | 88.63 | 89.24 | 89.31 | 88.71 | 86.77 |
| 380 | 88.65 | 88.93 | 89.76 | 89.66 | 89.09 | 87.14 |
| 390 | 89.47 | 89.95 | 90.87 | 90.80 | 90.19 | 88.36 |
| 400 | 90.07 | 90.61 | 91.63 | 91.60 | 90.80 | 89.28 |
| 410 | 90.20 | 90.82 | 91.87 | 91.86 | 91.03 | 89.33 |
| 420 | 90.34 | 91.04 | 92.18 | 92.14 | 91.31 | 89.35 |
| 430 | 90.29 | 91.11 | 92.23 | 92.14 | 91.34 | 89.20 |
| 440 | 90.48 | 91.29 | 92.50 | 92.47 | 91.60 | 89.22 |
| 450 | 90.64 | 91.51 | 92.74 | 92.64 | 91.88 | 89.33 |
| 460 | 90.98 | 91.81 | 93.05 | 93.01 | 92.23 | 89.58 |
| 470 | 91.28 | 92.20 | 93.44 | 93.33 | 92.54 | 89.84 |
| 480 | 91.64 | 92.47 | 93.78 | 93.79 | 92.96 | 90.05 |
| 490 | 91.72 | 92.61 | 93.79 | 93.81 | 93.05 | 90.14 |
| 500 | 91.96 | 92.82 | 94.00 | 93.99 | 93.28 | 90.22 |
| 510 | 92.20 | 92.97 | 94.18 | 94.22 | 93.45 | 90.36 |
| 520 | 92.45 | 93.19 | 94.37 | 94.44 | 93.70 | 90.37 |
| 530 | 92.50 | 93.22 | 94.36 | 94.42 | 93.72 | 90.33 |
| 540 | 92.58 | 93.30 | 94.43 | 94.45 | 93.85 | 90.36 |
| 550 | 92.66 | 93.33 | 94.27 | 94.40 | 93.86 | 90.25 |
| 560 | 92.69 | 93.33 | 94.36 | 94.46 | 93.94 | 90.19 |
| 570 | 92.71 | 93.31 | 94.27 | 94.44 | 93.89 | 90.06 |
| 580 | 92.73 | 93.24 | 94.20 | 94.34 | 93.83 | 89.90 |
| 590 | 92.72 | 93.21 | 94.15 | 94.32 | 93.84 | 89.77 |
| 600 | 92.67 | 93.12 | 94.06 | 94.19 | 93.74 | 89.63 |
| 610 | 92.53 | 92.92 | 93.79 | 93.87 | 93.52 | 89.33 |
| 620 | 92.49 | 92.86 | 93.75 | 93.84 | 93.50 | 89.17 |
| 630 | 92.41 | 92.73 | 93.59 | 93.72 | 93.42 | 89.01 |
| 640 | 92.27 | 92.58 | 93.29 | 93.52 | 93.17 | 88.71 |
| 650 | 92.14 | 92.32 | 93.11 | 93.39 | 93.03 | 88.39 |
| 660 | 91.98 | 92.19 | 92.89 | 93.07 | 92.89 | 88.20 |
| 670 | 92.10 | 92.26 | 92.97 | 93.16 | 92.97 | 88.30 |
| 680 | 91.92 | 92.05 | 92.70 | 92.91 | 92.69 | 88.01 |
| 690 | 91.87 | 92.00 | 92.68 | 92.83 | 92.63 | 87.90 |
| 700 | 91.69 | 91.77 | 92.43 | 92.58 | 92.41 | 87.63 |
| 710 | 91.45 | 91.49 | 92.06 | 92.25 | 92.12 | 87.31 |
| 720 | 91.47 | 91.52 | 92.13 | 92.27 | 92.14 | 87.23 |
| 730 | 91.19 | 91.19 | 91.69 | 91.91 | 91.85 | 86.90 |
| 740 | 91.08 | 91.04 | 91.57 | 91.74 | 91.70 | 86.69 |
| 750 | 90.91 | 90.83 | 91.34 | 91.53 | 91.49 | 86.43 |
| | | | | | | |
| **Delta T** | 2.57 % | 3.05 % | 3.96 % | 4.04 % | 3.54 % | |

As shown in table 3, an increase in transmission of the coated samples was obtained compared to the uncoated sample.

Fresh coating compositions as well as coating compositions aged for a period of time as described above were applied as also described above. After drying at 24 h at RT the initial transmission increase (dT) vis-à-vis an uncoated float glass sample was measured with the Perkin Elmer Lambda 1050 UV/vis/IR spectrometer. In addition, the dT was measured after abrasion testing had been carried out. As comparative example, 3M GC 200 coating composition was used. It must be pointed out in this regard that GC 200 normally requires curing at elevated temperatures. However, for comparing the results with the samples according to the present disclosure, GC 200 was only dried using the same procedure, i.e. drying 24 h at RT. The results are summarized in table 4.

**Table 4: dT after aging and after abrasion test procedures.**

| Sample | Initial Transmission Increase (dT) | Transmission Increase (dT) after Abrasion |
|---|---|---|
| Ex. 3 | 2.8 | 1.2 to 2.2 % |
| Ex. 3 (aged) | 2.8 | 1.6 to 2.3 % |
| Ex. 4 | 2.8 | 1.6 to 2.1 % |
| Ex. 4 (aged) | 2.4 | 1.4 to 2.4 % |
| Ex. 6 | 2.8 | 2.7 % |
| Ex. 6 (aged) | 2.5 | 2.5 % |
| Comp. Ex. | 2.64 | 0.10 % |

Testing of samples obtained from the coating composition according to example 6 were tested with regard to transmission increase vis-à-vis an uncoated sample of float glass. Next, samples of coatings of example 6 were subjected to test conditions of test regarding to damp heat, pressure cooker, abrasion, QUV, QUV (with spray) and shelf life in accordance with the test methods described herein. The results are summarized in table 5 below. % T drop revers to a drop of transmission compared to the transmission of the same sample before being subjected to aging conditions such as damp heat or pressure cooker.

**Table 5: Aging test conditions for samples coated with composition according to example 6.**

| Lab Test Method | Test Conditions | Test Standard | Test Results |
|---|---|---|---|
| Transmission (delta T) | 360-750 nm | EN 9050 AM1.5 | dT > 2.3 % |
| Damp Heat | 85 ± 5 % RH / 85 °C, 500 h | DIN EN 61215 | % T drop = 1.0 |
| Pressure Cooker | 120 °C, 100% RH, 8 h | | % T drop = 1.0 |
| Abrasion Test | 10 N / 3000 Cycles / 3M wipe 2010, wet | EN 1096-2 | % T drop = 0.3 |
| QUV | 1000 h, 8 h 0.89 W/cm² at 60 °C; condensation 4 h at 50 °C (8/4) | ASTM 154-1 | % T drop = 0.4 |
| QUV (with spray) | 500 h, 0.89 W/cm² at 60 °C, 15 min spray without heating, 3.75 h condensation at 50 °C | ASTM 154-2 | % T drop = 0.4 |
| Shelf Life | 65°C,7d | | % T drop = 0.4 |

The water contact angle of an uncoated float glass sample was measured and compared to a sample coated with the composition according to example 6. The results are summarized in table 7 below. A water contact angle of 5° and below indicates strong hydrophilicity.

**Table 7: Water contact angle test.**

| Untreated float glass | Float glass sample coated with coating composition according to example 6 |
|---|---|
| Contact angle = 31 ° (3 µm droplet) | Contact angle = 5 ° (3 µm droplet) |

Next, a soiling test was carried out as follows: a chamber (10 x 30 x 40 cm in size) was filled with Arizona sand (Arizona Test Dust Nominal 0-70 Micron). A sample of uncoated float glass was inserted into said chamber, after which the chamber was flushed with a nitrogen atmosphere such that a low relative humidity (about 20 %, corresponding to desert conditions) was achieved. After that, the box was shaken for about 1 min. The box was opened and the sample was inspected visually with the naked eye. The same procedure was repeated with a sample coated with a coating composition according to example 6. The samples were compared, and it was found that while the sample with the coating of example 6 had a clean surface, the surface of the untreated sample was not clean, i.e. covered with a fine layer of sand.

## Claims

1. An antireflective coating composition comprising
(a) Hydrophilic spherical silica nanoparticles;
(b) Hydrophilic elongated silica nanoparticles;
wherein the coating composition exhibits a pH-value in the range of from 7 to 12.5 and the ratio between the hydrophilic spherical silica nanoparticles (a) and the hydrophilic non-spherical silica nanoparticles (b) is in the range of from 10:1 to 1:10.

2. The antireflective coating composition according to claim 1, wherein the ratio between the spherical nanoparticles (a) and the elongated nanoparticles (b) is in the range of from 5:1 to 1:5, preferably in the range of from 3:1 to 1:3, more preferably in the range of from 2:1 to 1:2, even more preferably in the range of from 1:1 to 1:2.

3. The antireflective coating composition according to claim 1 or claim 2, wherein the coating composition is capable of curing at a temperature in the range of from 3 to 50 °C, preferably in the range of from 4 to 35 °C, and more preferably in the range of from 5 to 25 °C.

4. The antireflective coating composition according to any one of the preceding claims, wherein the nanoparticles (b) have a diameter over the primary axis of less than 200 nm, preferably of less than 150 nm, and the nanoparticles (a) have a diameter of less than 100 nm, preferably of less than 50 nm.

5. The antireflective coating composition according to any one of the preceding claims, further comprising (c) a polysilicate, preferably a polysilicate of the formula M₂(SiO₂)ₙO, wherein M is selected from Li, Na, K, preferably Li or Na, more preferably Li, and n is an integer between 2 and 15, preferably between 4 and 9.

6. The antireflective coating composition according to any one of the preceding claims, further comprising (d) an organic compound, preferably wherein the organic compound is selected from polysaccharides, proteins and polyvinyl alcohols, preferably are selected from natural and modified polysaccharides, preferably polysaccharides selected from the list consisting of xanthan, carrageenan, pectin, gellan, xanthan gum, diuthan, cellulose ethers such as carboxymethyl cellulose, methyl cellulose, ethyl cellulose and hydroxyethyl cellulose.

7. The antireflective coating composition according to any one of the preceding claims, further comprising (e) a solvent, preferably wherein the solvent comprises at least one solvent selected from the list consisting of alcohols and water, preferably comprises at least one alcohol and/or water, more preferably comprises water.

8. The antireflective coating composition according to any one of the preceding claims, wherein the coating composition comprises:
(a) spherical nanoparticles in an amount of from 15 to 85 wt.-%, preferably from 25 to 70 wt.-%, more preferably from 30 to 55 wt.-% relative to the total weight of the solid contents of the coating composition;
(b) spherical nanoparticles in an amount of from 15 to 85 wt.-%, preferably from 25 to 70 wt.-%, more preferably from 40 to 70 wt.-% relative to the total weight of the solid contents of the coating composition;
(c) optionally a polysilicate in an amount of from 1 to 25 wt.-%, preferably from 5 to 15 wt.-% relative to the total weight of the solid contents of the coating composition;
(d) optionally an organic compound in an amount of from 0.01 to 5 wt.-%, preferably from 0.02 to 3 wt.-%, more preferably from 0.04 to 1.6 wt.-% relative to the total weight of the solid contents of the coating composition, and
(e) optionally a solvent.

9. A method for coating a substrate, comprising the steps
(i) providing a substrate having at least one surface;
(ii) providing the antireflective coating composition according to any one of claims 1 to 7;
(iii) coating the substrate on at least one surface;
(iv) drying the coating, thereby obtaining a coated substrate,
wherein step (iv) is carried out at a temperature in the range of from 5 °C to 300 °C.

10. Method according to claim 9, wherein the substrate is selected from polymeric material, glass, metal, wood, ceramics, preferably glass and metal, more preferably glass and ceramics, even more preferably glass.

11. Coated substrate, comprising a substrate and a coating on at least one surface of the substrate, the coating obtained from an antireflective composition according to any one of claims 1 to 8 or by a method according to any of claims 9 and 10.

12. Coated substrate according to claim 11, wherein the substrate is a panel, sheet, shaped article or a film.

13. Coated substrate according to any one of claims 11 to 12, wherein the coating exhibits a dT of at least 1.0 %, preferably of at least 1.4 %, more preferably of at least 1.8 %, even more preferably of at least 2.0 % according to DIN EN 1050 and/or a static water contact angle according to ISO 15989 of 20 ° or less, preferably of 10 ° or less, more preferably of 7 ° or less.

14. Coated substrate according to any one of claims 11 to 13, wherein the coating is on one surface of the substrate or on two opposite surfaces of the substrate.

15. Use of the antireflective coating composition according to any one of claims 1 to 8 or of the coated substrate according to any of claims 11 to 14 for improving the light transmission and/or the hydrophilicity of a solar glass panel, a greenhouse glass panel, a window, or structural glazing of buildings or vehicles.
